(19) **Europäisches Patentamt**

**European Patent Office**

**Office européen des brevets**

(11) **EP 0 868 233 B1**

(12) **EUROPEAN PATENT SPECIFICATION**

(45) Date of publication and mention
of the grant of the patent:
**17.04.2002 Bulletin 2002/16**

(21) Application number: **96940108.2**

(22) Date of filing: **12.12.1996**

(51) Int Cl.$^7$: **B21D 26/14**

(86) International application number:
**PCT/IL96/00180**

(87) International publication number:
**WO 97/22426 (26.06.1997 Gazette 1997/27)**

(54) **ELECTROMAGNETIC JOINING OR WELDING OF METAL OBJECTS**

ELEKTROMAGNETISCHES VERBINDEN ODER SCHWEISSEN VON METALLISCHEN OBJEKTEN

SOUDAGE OU ASSEMBLAGE ELECTROMAGNETIQUE D'OBJECTS METALLIQUES

(84) Designated Contracting States:
**AT BE CH DE DK ES FI FR GB GR IE IT LI LU MC NL PT SE**

(30) Priority: **20.12.1995 US 575321**
**30.08.1996 IL 11916096**

(43) Date of publication of application:
**07.10.1998 Bulletin 1998/41**

(73) Proprietor: **Pulsar Welding Ltd**
**75241 Ruishon Ie-Zion (IL)**

(72) Inventors:
• **LIVSHIZ, Yuri**
**44837 Ariel (IL)**

• **GAFRI, Oren**
**75241 Rishon Ie-Zion (IL)**

(74) Representative: **Thomson, Paul Anthony**
**Potts, Kerr & Co.**
**15, Hamilton Square**
**Birkenhead Merseyside L41 6BR (GB)**

(56) References cited:
**US-A- 3 654 787**  **US-A- 4 026 628**
**US-A- 4 170 887**  **US-A- 4 531 393**
**US-A- 5 261 151**  **US-A- 5 442 846**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

## FIELD OF THE INVENTION

The present invention is generally in the field of metal works and relates to a method for working of metallic workpieces. The present invention relates particularly to a method for working of metallic workpieces by a pulsed magnetic energy.

## BACKGROUND OF THE INVENTION

Pulsed magnetic forming (PMF) is a process in which a metal workpiece or a portion thereof is put into a rapid motion by a pulsed magnetic field which causes the workpiece to deform. One advantage of the PMF process is in that energy loss in this process is minimal and consequently there is no or very little h eating of the workpiece. In addition, this process does not have the disadvantage of leaving tool marks, as in the case in a variety of other techniques (see M.Cenanovic, Magnetic Metal Forming by Reverse Electromagnetic Forces. In proceedings of the Fourth IEEEE Pulse Power Conference, Institute of Electrical and Electronic Engineering, 1983).

The PMF process uses a discharge capacitor or a bank of capacitors, a forming coil and often a field shaper, for creating an intense magnetic field. The very intense magnetic field required for th PMF process is a result of a very rapid discharge of electric energy, stored in the capacitor, into the forming coil. The resulting eddy currents that are induced in the workpiece yield magnetic repulsion between the workpiece and the forming coil, and this causes the workpiece to deform.

As the workpiece surface moves under the influence of the repulsion force, it perceives energy of from the magnetic field. In order to apply most of the available energy to the forming and reduce enery losses due to energy waste by resistance heating, the forming magnetic pulse also must be very short. In most PMF applications, the pulses have a duration between about 10 to about $250\mu$ sec (duration of the first wave of the discharging current).

Background on prior art apparatuses and methods for working of metal workpieces by the PMF process can be found in the following U.S. Patents: 3,654,787 (Brower), 3,961,739 (Leftheris), 4,170,877 (Baranov), 4,531,393 (Weir), 4,807,351 (Berg *et al*.), 5,353,617 (Cherian *et al*.) and 5,442,846 (Snaper).

U.S-A-5,442,846 which document discloses the combination of features according to the pre-characterising part of claim 1 discloses a procedure and an apparatus for cold joining of metal pipes by a bridging sleeve, using a method of magnetic forming. The described procedure comprises steps of arranging pieces to be joined at predetermined and mutually dependent positions in space to ensure the reliable joining. The pieces are provided with specific grooves in their surfaces and coated with adhesives for obtaining better results.

## GENERAL DESCRIPTION OF THE INVENTION

In the following text, with the aim of streamlining the description and facilitating better understanding of the invention, use will at times be made with the following terms:

**Workpiece:** A metal object which is deformed, in accordance with the invention, by work applied on surfaces thereof.

**Moving surface:** A surface of a workpiece which is put into an abrupt and rapid motion by a pulsed magnetic force. In accordance with the invention, the moving surface is a solid made to impact another surface (which may be a moving surface moving in an opposite direction) with a kinetic energy which causes the two surfaces to become joined or welded (regarding *"joining"* and "*welding*" - see below).

**Working:** A process which is a result of work applied on a workpiece or on a portion thereof which causes the workpiece or portion to deform. Working in accordance with the invention is by means of PMF and in addition to giving rise to a change in shape of the workpiece, brings to joining of a surface of a worked on workpiece or portion, to another surface.

**Joining:** Working of an object or portion thereof so as to cause a surface thereof to come into very tight contact with another surface. Joining, for example, may be an act of crimping of an essentially tubular workpiece against another cylindrical object within the workpiece's interior so as to very strongly and essentially permanently force opposite surfaces of the two objects against one another. The purpose of joining may, for example, be to ensure tight electrical contact, i.e. with minimal electrical resistance, between two objects.

**Welding:** Forming of a first workpiece in a manner such that the two initially separated, opposite surfaces become integrated with one another. In welding such two surfaces are in fact melted and then solidify together to become integral.

**Worked on portion:** Part or portion of a workpiece which is being worked, i.e., being put into a rapid motion by a PMF force, for joining or welding to another portion of a workpiece. For example, in the case of a cable lug or a connector, the worked on portion will consist of the portion which comprises a hollow receptacle which receives the cable and which is then crimped by the PMF force to join or weld with the cable contained therein. The worked on portion is made of an electrically conductive material or has at least a surface coated by an electrically conductive material. The electrically conductive material may, for example, be made of metal or an electrically conductive polymer.

**Counter portion:** A portion of a workpiece which is being joined or welded to the worked on portion. The counter portion may be included in a different workpiece to that comprising the worked on portion (e.g. in the case of joining the cable in a cable lug, the worked on portion will be the portion comprising the receptacle of the cable lug, as noted above, and the counter portion will be the portion of the cable containing the receptacle which becomes joined or welded to the worked on portion), although at times the counter portion may be included in the same workpiece as the worked on portion (e.g. welding two flanges of a workpiece to one another, crimping a tube for joining or welding its walls one to the other so as to seal the end of a tube, etc.). The counter portion may at times also be a worked on portion, this being the case, for example, where two portions are put in rapid motion one against the other to bring them to join or weld to one another (e.g. this is the case in crimping walls of a tube to seal a tube end).

**First workpiece:** A workpiece which comprises the worked on portion which has to be joined or welded to a counter portion in another, *second workpiece* (see below).

**Second workpiece:** A workpiece comprising the counter portion in the case where the worked on metal portion is in another workpiece.

The present invention concerns the employment of the PMF process for joining or welding surfaces of workpieces or portions of workpieces to one another. In accordance with the present invention this is achieved by causing at least one workpiece or a portion of a workpiece comprising one of the surfaces to be joined or welded (the worked on portion) to move rapidly towards another workpiece or a portion of a workpiece comprising the other surface to be joined or welded (the counter portion). The rapid movement results from a PFM force applied on the worked on portion which is either made of an electrically conductive material or has at least one surface which is coated by an electrically conductive material. The conditions of the PMF force are controlled such that after the two surfaces impact one against the other they become joined or welded to one another. The control of PMF force is typically such that the speed of the moving surface will impart a kinetic energy to the worked on portion, prior to impact, which is larger than the sum of the plastic deformation of the worked on portion and of the elastic deformation of the counter portion.

The invention provides a novel process for joining or welding of objects one to another, as well as structures obtained by such joining or welding. The process of the invention allows the manufacture of e.g. a joint between a cable and a connector such as a cable lug in which the filaments or wires are compacted almost to maximum with very little void space (being close to zero), i.e. the filaments or wires fill essentially the entire lumen in which they are contained; or a super conductor cable having filament embedded in a cable sheath or matrix with very little void space; joints between two super conductor cables; a novel grounding cable or pole; etc.

The invention thus provides a method of joining or welding of at least two solid portions one to another as defined in claim 1, comprising inducing movement in at least one of the solid portions, which is either made of an electrically conductive material or has at least one surface coated by an electrically conductive material, by means of a pulsed magnetic forming force so as to impact at least one other solid portion, the movement imparting a kinetic energy on the at least one solid portion to cause the at least two solid portions to join or weld to one another.

The two solid portions to be joined or welded may be made both of the same material or may be made both of a different material. For example, both may be made of steel, of stainless steel, of brass, of copper, etc. Alternatively, one may be made of one such exemplary alloys or of an electrically conductive polymer and the other may be made of another material such as metal, electrically non-conductive material, etc.

The two solid portions which are to be joined or welded to one another, *a priori* facing one another or are placed so that opposing surfaces either touch or are proximal to one another. The PMF force is then applied from a forming coil situated proximal to a surface of the worked on portion other than that which is opposite a corresponding surface in the counter portion, and thus brings to movement of the worked on portion. (It should be noted that even where the two portions touch one another, there is sufficient spacing between the two surfaces on a microscopic level to allow acceleration and build-up of kinetic energy by the worked on portion).

As already pointed out above, the worked on portion and the counter portion may be both on the same workpiece. This may, for example, be the case of crimping an end of a tube, e.g. a metal tube, to join or weld internal walls one to another so as to seal the tube. Alternatively, as also already pointed out above, the worked on portion may be on one object and the counter portion may be on another object: for example, as in the case of joining a connector to an electric cable. In most cases, one of the solid portions to be joined or welded will be stationary and the other will be a worked on portion which is put into rapid motion by a PMF force. However, in some cases, both solid portions will be put into a motion one against the other, this being the case, for example, in sealing of an end of a metal tube, already noted above. In the latter case where all solid portions to be joined or welded are forced into rapid movement, both will in effect be worked on portions as well as counter portions.

In accordance with one embodiment of the invention, the two solid portions to be joined or welded, each on separate object (a first and a second workpiece) are both independently, an elongated portion. In accordance with this embodiment, at least the worked on solid portion is a hollow elongated member, and the dimensions of the two portions being initially such that they can fit one into the other. The method according to this embodiment comprises:

(a) inserting one of the two portions into a hollow interior of the other;
(b) causing surfaces of a first elongated worked on portion of a first workpiece to move towards opposite surfaces of the other elongated counter portion of a second workpiece by means of a pulsed magnetic force, so as to cause the surfaces of the worked on portion to impact the opposite surfaces of the counter portion at a velocity such that the kinetic energy of the moving worked on portion of the first workpiece prior to the impact will be larger than a combination of the plastic deformation energy of the moving portion and the elastic deformation energy of the counter portion after the impact; whereby the two portions become joined or welded to one another.

Examples of the embodiment is the joining of an electric cable with a cylindrical workpiece or a portion of the workpiece, e.g. joining of a cable with a cable lug or with another type of connection device; joining or welding of two elongated objects, e.g. two electric cables or two rods, by means of a tubular joining member; welding of two tubes to one another; etc.

In accordance with another embodiment of the invention, the two portions to be joined or welded are essentially planar. Examples of this embodiment are the joining or welding of one metal board, panel or foil to another, welding of an end of one metal band or foil to the end of another metal band or foil, etc.

A further embodiment of the invention is concerned with the production of super conductor cables or wires. Such cables have a matrix, envelope or jacket made from one alloy, e.g. aluminum or copper, and have filaments, which are contained within lumens or longitudinal bores in the cable, and which are made from another alloy, e.g. niobium or titanium - niobium alloys. Such a composite cable or wire is prepared by inserting filaments within longitudinal bores or hollow lumen of a cable or wire which is then constricted by means of a PMF process. As a result, a very tight composite cable or fiber is obtained with very little, almost zero void space. At times, the filaments are by themselves a composite structure, and may also be prepared by a PMF process in accordance with the invention.

A still further embodiment of the invention concerns the production of a ground lead or cable, particularly such having an internal metal core sheathed by an insulating material, at times encased within another metal sheath.

An additional embodiment is concerned with the crimping and welding of walls of a metal tube so as to form a gas tight seal.

A further embodiment is concerned with the crimping of a tube made of metal or of an electrically conductive polymer, onto an object made of an electrically non-conductive material so as to bring to joining of the tube with said object.

The PMF process of the invention may also be used, in accordance with other embodiments, for joining or welding of a first, planar workpiece, to a second, spherical workpiece.

The overall form and dimensions of the forming coil in the device used in performing the invention will determine the worked-on metal portion which joins or welds to the counter metal portion as well as, at times, the final shape of the worked-on portion. For example, in case of joining or welding of two planar workpieces, the size and shape of the planar forming coil will determine the size and shape of the portion of the first workpiece which is being worked and which then welds to the counter portion in the second workpiece. In case of joining or welding of two elongated portions, the length of the coil will determine the length of the worked on portion which welds to or joins with the counter portion. Furthermore, the shape of the forming coil, i.e. the shape of the path traced by the coil, will be a factor influencing the final cross-sectional shape of the worked on portion after working thereof. For example, in joining together of two tubular objects, a forming coil has a hexagonal shape, may yield a final hexagonal shape of the worked on portion.

The manner of performance of the invention will now be illustrated further by reference to a specific embodiment of the invention concerned with the joining or welding together of two essentially cylindrical objects.

The worked on (first) portion according to the above specific embodiment is preferably cylindrical, although it may also be prismatic, may have an elliptical or oval cross-sectional shape, etc. The counter (second) portion is also preferably cylindrical, but similarly as the first portion it can also have a variety of cross-sectional shapes other than circular. The second portion may have a cross-sectional shape similar to the first workpiece, i.e. both will have a circular cross-sectional shape, both will have a hexagonal cross-sectional shape, etc. However, the first and second portions may also have different cross-sectional shapes, e.g. the first portion will be cylindrical and the second portion will be prismatic, etc.

In each case, the respective dimensions of the two portions should be such to allow either insertion of the second portion into the lumen of the first portion or the insertion of the first portion into the lumen of the second portion.

The first portion is induced into a rapid movement by a pulsed magnetic force generated by a coil proximal to one of its surfaces other than the surface which welds or joins to the opposite surface in the second portion. In one embodiment of the invention, the second portion is inserted within the first portion and the first portion is then crimped onto the second portion, by means of a magnetic forming coil surrounding its external surface. In accordance with another embodiment, the first portion is inserted into a lumen of the second portion and then expanded by a magnetic force from a coil adjacent its interior surface so as to cause it to impact into and then join with the walls of the surrounding second portion.

Edges of a prismatic hollow object, are somewhat more resistant to crimping than other parts of the walls of the prismatic object. Thus, in the case of a prismatic object, the PMF force may have to be adjusted somewhat to account for this additional resistance. The resistance towards crimping at the object's edges decreases with increase in the associated angle, which is correlated with the increase in the number of sides of the prismatic object. Accordingly, edges of octagonal objects are less resistant to crimping forces than edges of a hexagonal object (assuming the same wall thickness and the same metal alloy in both cases), and edges of hexagonal objects are in turn less resistant to crimping than those of a pentagonal or a rectangular object. It is clear that when the number of sides of the prismatic hollow object is increased, the PMF force required for crimping approaches that of a cylindrical object. The extra force required in case of a prismatic hollow object (as compared to a hollow cylindrical object) can also be reduced by rounding the edges. The artisan should be able, without undue difficulties, to design a PMF device with a forming coil to meet a certain desired specification.

In the following, the invention will be described with reference to a preferred embodiment in which both the first and the second portions are cylindrical. At the moment of impact of the rapidly moving first portion with the second portion, the kinetic energy of the first portion is at least equal to the sum of the plastic deformation energy of the moving first portion after the impact and the elastic deformation energy of the second, still portion. This may be represented by the following approximate Equation (1):

$$U \geq \sqrt{(A_1 + A_2)/m_1} \tag{1}$$

wherein

U        is the velocity of the moving surface of the first portion, prior to the impact,
$m_1$       is the mass of the first portion, and
$A_1$ and $A_2$    are the plastic deformation energy of the first portion, and the elastic deformation energy of the second portion, respectively, which may be calculated according to the following approximate Equations (2) and (3):

$$A_1 = \sigma_1 V_1 e^{\ln(1/(1+\delta_1))}/(r_{01}/r_1 - 1) \tag{2}$$

$$A_2 = \sigma_2 V_2 e^{\ln(1/(1+\delta_2))}/(r_{02}/r_2 - 1) \tag{3}$$

wherein

$r_{01}$ and $r_{02}$,    are, respectively, the radii of the first and second portions prior to the deformation,
$r_1$ and $r_2$      are, respectively, the radii of the first and second portions after deformation,
$\sigma_1$ and $\sigma_2$      are the tensile strength of the alloys of which the first and second portions are made,
$V_1$ and $V_2$      are, respectively, the volumes enclosed within the first and within the second portions after the deformation, and

$\delta_1$ and $\delta_2$    are the relative extension of the first and the second portions, respectively, calculated according to the following Equations (4) and (5):

$$\delta_1 = \left| \frac{r_{01} - r_1}{r_{01}} \right| \tag{4}$$

$$\delta_2 = \left| \frac{r_{02} - r_2}{r_{02}} \right| \tag{5}$$

Based on the above energy requirements ($A_1$ and $A_2$), the working voltage (V) may be calculated by the following Equations (6) and (7):

$$W = \frac{km_1 U^2 L l_1}{4\pi\mu_0 r_{01} h} \tag{6}$$

where

W             is the energy stored in the capacitor battery,

$$V = \sqrt{\frac{2W}{C}} \tag{7}$$

k             is a coefficient which depends on the parameters of the PMF device (including capacitance and own inductance) and parameters of working coil,
L             is the total inductance of the electric discharge circuit (the coil, pulse generating switch and capacitor battery),
l             is the length of the working coil (and also the length of the deforming section of the workpiece),
$\mu_0$           is the magnetic permeance in vacuum,
h             is the thickness of the space between the working coil and the workpiece,
U, m and $r_{01}$    are as defined above.

Where the object is other than cylindrical, it may at times be necessary to utilize somewhat altered parameters of the pulsed magnetic energy. For such objects it is necessary to define $A_1$ and $A_2$ and thereafter the velocity and the voltage can be determined using Equations (6) and (7). For example, where a prismatic hollow object is crimped onto a cylindrical object in its interior, typically a somewhat stronger magnetic force will be required in view of the increased resistance of the edges to deformation. In addition, as will be appreciated, the above equations are applicable for a situation where the length of the portion which is being deformed is larger than the tube's diameter; where the portion is smaller than the tube's diameter, some corrections in view of resistance towards deformations at one or both ends of the deformed portion should be taken into account.

The kinetic energy which will be imparted on the first portion, will determine whether the first and the second workpiece will join or weld to one another. Generally, larger kinetic energy will result in welding and smaller in joining. Typically, where the moving speed of the surfaces of the first workpiece are less than 300 meters/second, the first and second workpieces will be joined to one another. Where the moving speed of the surfaces of the first workpiece is more than 300 meters/second, the surfaces of the first and second workpieces which come into contact, may become welded to one another. For welding, it is usually preferred to maintain some small separation between the opposite surfaces of the first and the second workpiece to allow said surface of the first workpiece to accelerate and achieve the desired velocity for welding. For welding it is at times desired for the non-moving, second workpiece to be firmly immobilized so as to stay essentially motionless at the time of impact of the first workpiece therewith.

At times it may be desired to induce movement of the worked on portion by several magnetic pulses one after the other rather than by a single magnetic pulse. This may be achieved, for example, in a device having a plurality of current discharge circuits, each of which being activated at different times. Such a device is novel and also forms an aspect of the invention.

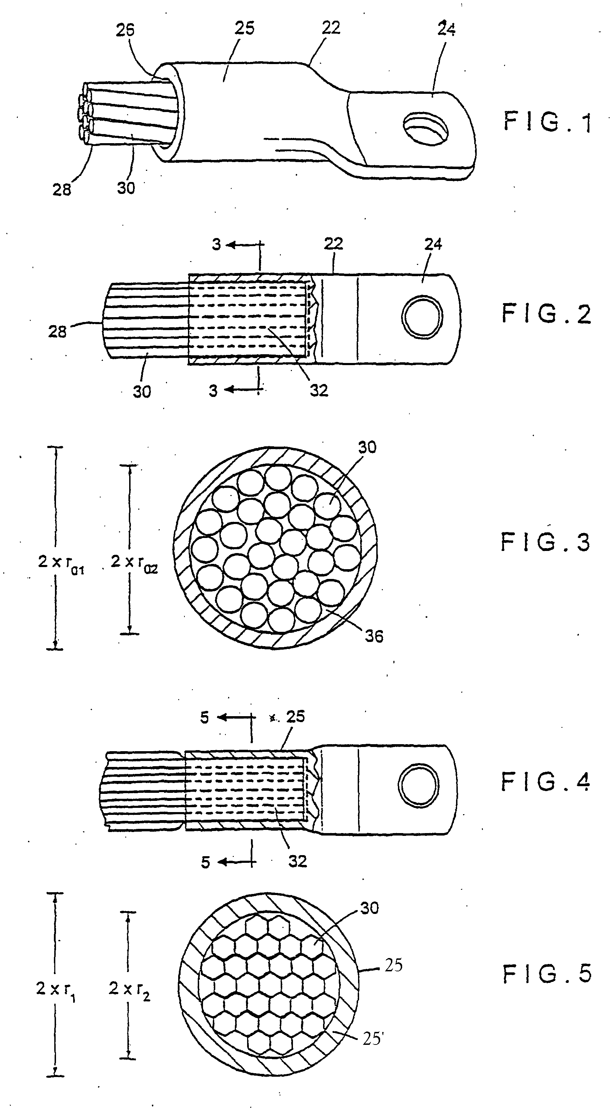

In the following, the invention will be exemplified by nonlimiting specific embodiments, with occasional reference being made to the annexed drawings. The exemplified embodiments are concerned primarily with the working of portions of metal workpieces. However, it will be appreciated that the invention in general and many of the described embodiments in particular is also applicable, *mutatis mutandis*, to the working of portions made of an electrically conductive material other than metal, e.g. a conductive polymer. For example, a tube made of an electrically conductive polymer may be worked in a similar manner as illustrated in Figs. 1-5 or 16. In addition, rather than being made wholly of electrically conductive material, the worked on portion of the exemplified embodiments may have one or more surfaces which are coated by a conductive material. The artisan, based on the teaching of this invention, will have no difficulties in carrying out the invention with worked on portions made of electrically conductive material other than metal or such comprising only one or more surfaces made of electrically conductive material.

**BRIEF DESCRIPTION OF THE DRAWINGS**

**Figs. 1-5** show a sequence of joining together of a multi-fiber cable and a cable lug:

**Fig. 1** is a perspective view of an assembly consisting of a cable and a cable lug after insertion of the end of the cable into the lumen of the cable lug;

**Fig. 2** is an upper, partially cross-sectional view of the assembly of Fig. 1;

**Fig. 3** is a cross-section through lines 3-3 in Fig. 2;

**Fig. 4** is an upper, partially cross-sectional view of the assembly after constriction of the cylindrical portion of the cable lug and the formation of a firm joint between the cable and the cable lug;

**Fig. 5** is a cross-section through lines 5-5 in Fig. 4;

**Fig. 6A** is an isometric view of a PMF device useful, *inter alia,* for the preparation of a joint between a cable and a cable lug as shown in Figs. 1-5;

**Fig. 6B** is a side view of a PMF coil;

**Fig. 7** shows a device;

**Fig. 8** shows a joint between a cylindrical object and a tube manufactured using a device such as that shown in Fig. 7;

**Fig. 9** is a schematic representation of the manner of joining of two poles, in accordance with an embodiment of the invention;

**Fig. 10** is a schematic representation of the manner of joining of two super conductor cables to one another, in accordance with an embodiment of the invention;

**Fig. 11** is a schematic representation of another embodiment in accordance with the invention for joining of two super conductor cables;

**Fig. 12** is a schematic cross-sectional representation of the manner of production of a grounding cable;

**Fig. 13** is a schematic cross-sectional representation of the manner of producing a super conductor cable;

**Fig. 14** shows a heating coil where the coil and an electric pin are joined or welded together by means of a metal sleeve constricted onto the coil by a PMF process in accordance with the invention:

**Fig. 14A** is a side view of this device;

**Fig. 14B** shows a cross-section through lines 14b-14b in Fig. 14a;

**Fig. 15** shows a device;

**Fig. 15A** shows one manner of use of the device for joining or welding two hollow cylindrical objects, employing an insert or a proper positioning of the two objects and supporting the walls;

**Fig. 15B** shows another manner of using the device for joining or welding two hollow cylindrical objects, without the use of such an insert;

**Fig. 15C** shows a longitudinal cross-section through a joint between two pipes of different diameter, welded together by the device of Figs. 15A or 15B;

**Fig. 16** shows the manner of crimping and welding to one another walls of a metal tube to achieve an airtight seal, in accordance with an embodiment of the invention;

**Fig. 17** shows the set-up for welding of two planar metal objects;

**Fig. 18** is a cross-section through lines 18-18 in Fig. 16;

**Figs. 19 and 20** show two embodiments for welding of an initially planar metal workpieces to a spherical metal workpiece;

**Fig. 21** is a schematic representation of the magnetic conductor circuit operating in a device according to an embodiment of the invention; and

**Fig. 22** shows the magnetic conductor circuit in a device in accordance with another embodiment of the invention.

**DESCRIPTION OF SPECIFIC EMBODIMENTS**

Reference is first being made to Figs. 1-5 which show the manner of joining of a cable to a cable lug in accordance with an embodiment of the invention. Cable lug **22** comprises an attachment base **24** for attachment to another body, and an essentially tubular portion **25** with a lumen **26.** Cable **28** comprises a plurality of conductor fibers **30** each having an essentially cylindrical cross-section.

Cable **28** and cable lug **22** are combined by inserting end portion **32** of the cable into lumen **26** of the cable lug as can be seen in Figs. 1-3. The cylindrical tubular portion **25** has an original radius $r_{01}$ and the cable has an original radius $r_{02}$.

In order to join the cable with the cable lug, a pulsed magnetic force is applied onto the tubular portion **25** and consequently, the tubular portion **25** is crimped whereby the inner faces thereof become joined with the end portion **32** of cable **28,** as can be seen in Fig. 4.

As a result of this crimping, as shown in Fig. 5, fibers **30** are compressed to become hexagonal. After crimping the tubular portion **25,** has a radius $r_1$ and the cable has a radius $r_2$. Following crimping, there is some thickening of the walls of the constricted tubular portion **25'**.

In a typical cable, fibers fill up about 65% of its internal space. After full compression, whereby the fibers become hexagonal, the fibers come to fill essentially 100% of the internal space of the cable. This means that the cable after full compression constricts to about 80% of its original diameter.

Accordingly, by knowing $r_{02}$, $r_2$ may be calculated as being equal to about 80% of $r_{02}$. $r_2$ is equal to the internal radius of portion **25** after constriction, and by knowing the original wall's thickness of portion **25,** the wall thickness after constriction may be calculated and from there $r_1$ (the radius of cylindrical portion **25** (after constriction) may be derived. Then, by employing the above Equations 1-5, the magnetic parameters required for this process may be calculated.

Joining of a cable with a cable lug is an example for the joining of a cable with a cylindrical workpiece. Other examples are connecting two cables one to another by the use of an elongated connector with two hollow receptacles at both its ends or by the use of a hollow tube, etc.

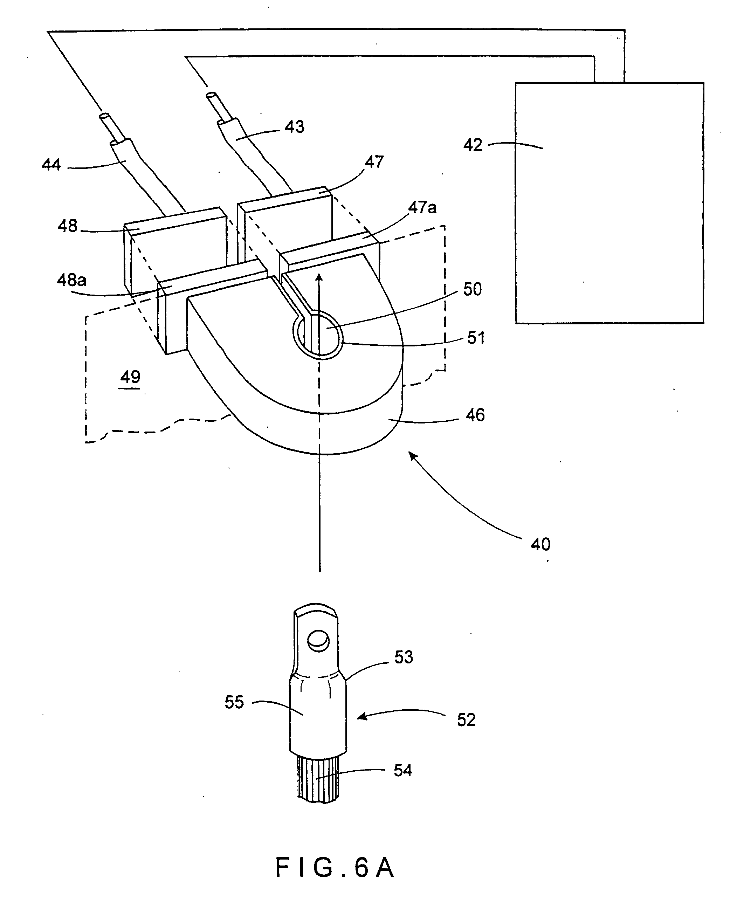

Reference is now being made to Fig. 6A showing, in a semi-schematical manner, a device suitable for carrying out the process as described in Figs. 1-5. The device generally designated **40** comprises a control module **42** which can provide a rapid intense current discharge, electric leads **43** and **44** for the transfer of the current, and a forming coil **46.** Electric leads **43** and **44** are electrically linked to coil **46** by means of connectors **47** and **47a** and **48** and **48a.** Typically, the forming coil **46** protrudes from a surface, e.g. a working table, represented here by a dotted-lined surface **49,** with the rest of the device constituents being hidden behind the surface. Forming coil **46** has a lumen **50** to which a workpiece to be constricted is inserted. The internal walls of coil **46** are typically lined by insulating lining material **51.**

In this specific embodiment, device **40** is used for producing of a joint between a cable and a cable lug shown in Figs. 1-5. As will be appreciated, the device can also be used for a variety of other purposes, e.g. production of a grounding cable, a super conductor cable, joining of two super conductor cables, and a variety of other purposes some of which are described below. The width of coil **46** determines the length of the portion which will be crimped when current is discharged through coil **46.**

In this specific example, an assembly **52** which comprises a cable lug **53** and a cable **54**, which are in loose association with one another, is inserted into lumen **50** in a manner that the cylindrical portion **55** of cable lug **53** is essentially entirely within lumen **50.** Then, a strong current is rapidly discharged through coil **46** and the PMF force which arises in consequence thereto, brings to crimping of the walls of cylindrical portion **55** onto the end of cable **54,** whereby the two become firmly joined to one another.

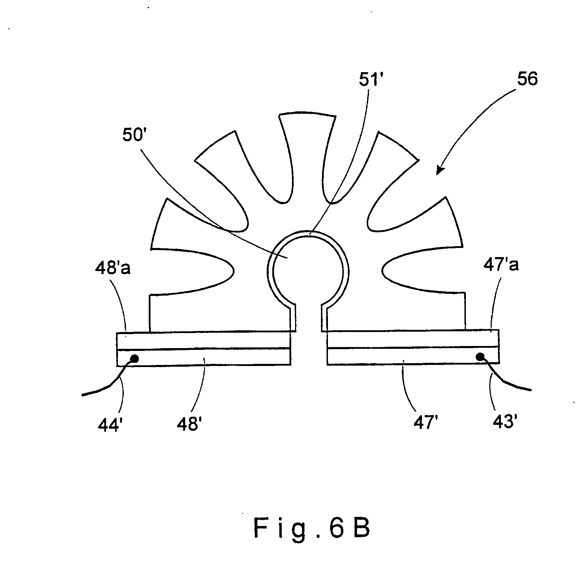

Fig. 6B shows a forming coil generally designated **56** which may serve a similar purpose to the coil shown in Fig. 6A. For ease of description, elements with a similar function to those of the embodiment of Fig. 6A have been given like reference numerals with a prime indication and the reader is referred to the description above for explanations of their function. As can be seen, the main difference of coil **56** from coil **46** in Fig. 6A is in that it has a rib-like structure. The advantage in such a structure is that on the one hand the current is restricted to a narrower space and it thus more effective in forming, and on the other hand, the ribs provide the strength required from such a coil.

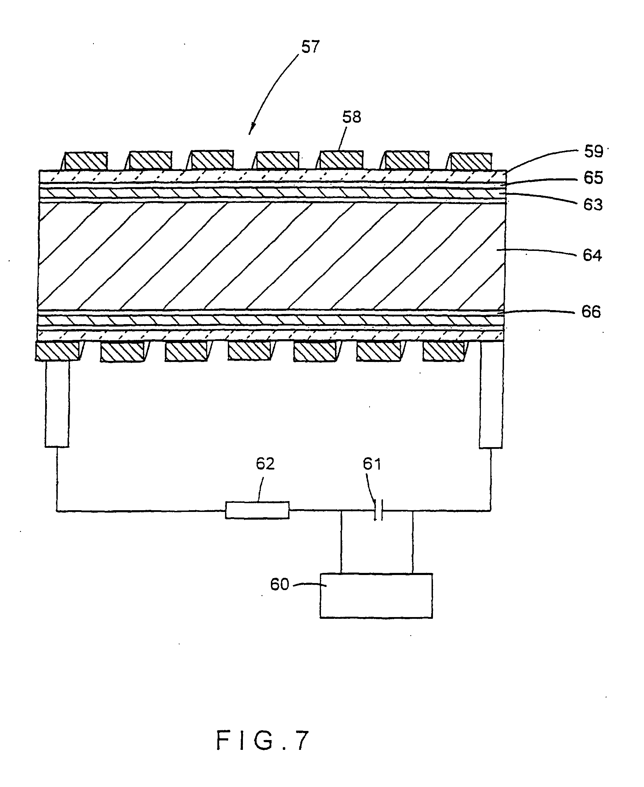

Fig. 7 shows a device in accordance with another embodiment of the invention which in this specific example is used for welding or joining of a tube onto a rod. Similarly as in the embodiment shown in Fig. 6, it is clear that this device may also be used for a variety of other purposes. The device, generally designated **57** comprises a forming coil **58** having a plurality of winds (7 in this specific example) around a tube **59** which is made of insulating material such as plastic. The device further comprises a power supply **60** connected in parallel to a capacitor battery **61** and a switch **62**. The power generator **60** charges capacitor **61** and following actuation by means of switch **62** a current is discharged through forming coil **58.**

The two workpieces to be joined together which consist, in this example, of a metal tube **63** and a metal rod **64** are inserted within lumen **65** of insulating tube **59.** In order to weld the two workpieces to one another, there should preferably be some clearance **66** between the two workpieces, typically about 5-20% of the internal diameter of tube **63.**

As can be appreciated, upon discharge of capacitor **61,** there is a rapid and intense current flow through coil **58** which causes eddy currents in tube **63** and the resulting magnetic pressure then causes it to rapidly crimp onto and welds with rod **64.** The length of the portion of tube **63** which is being crimped corresponds to the length of coil **58.**

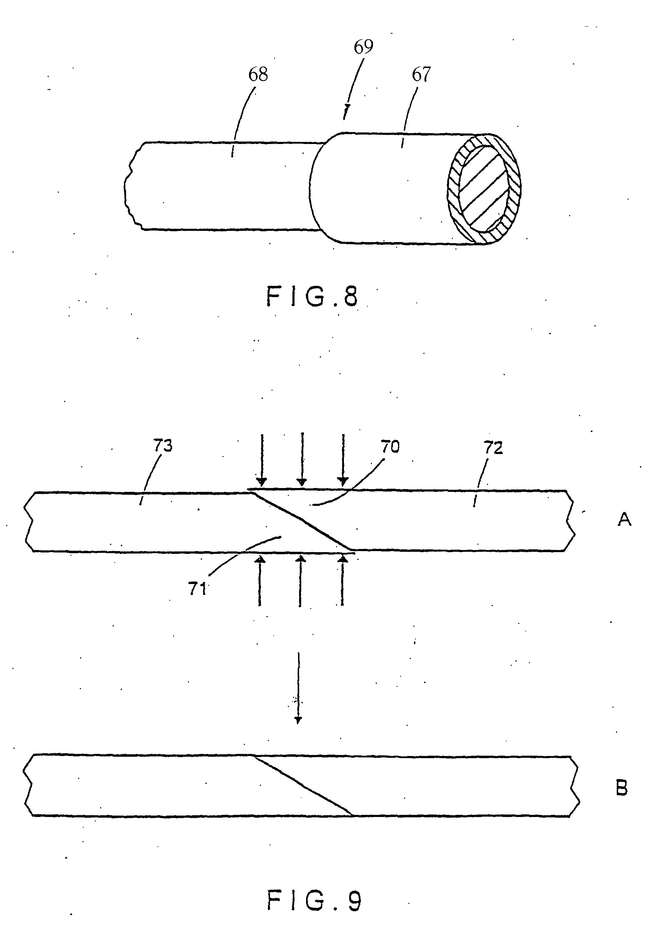

Fig. 8 shows a joint **69** between a tube **67** and a rod **68** prepared in a manner described with reference to Fig. 7. Depending on the intensity of the magnetic pressure used to create the joint, and consequently the speed of movement of the cylinder prior to impact with the rod, there will either be welding between the two workpieces or only tight joining.

Fig. 9 shows the manner of joining together of two ends of elongated metal objects in accordance with an embodiment of the invention. The ends **70** and **71** of elongated objects **72** and **73**, respectively, is cut or beveled so as to produce two complementary oblique surfaces with a relatively obtuse angle versus the longitudinal axis of the body. The two objects are placed so that their beveled or cut ends touch one another with their axis being slightly out of line with respect to one another. Then, following the application of a strong pulsed magnetic force, as shown schematically by the arrows in Fig. 9A, the two end segments **70** and **71** impart one another and become welded, i.e. integral, with one another.

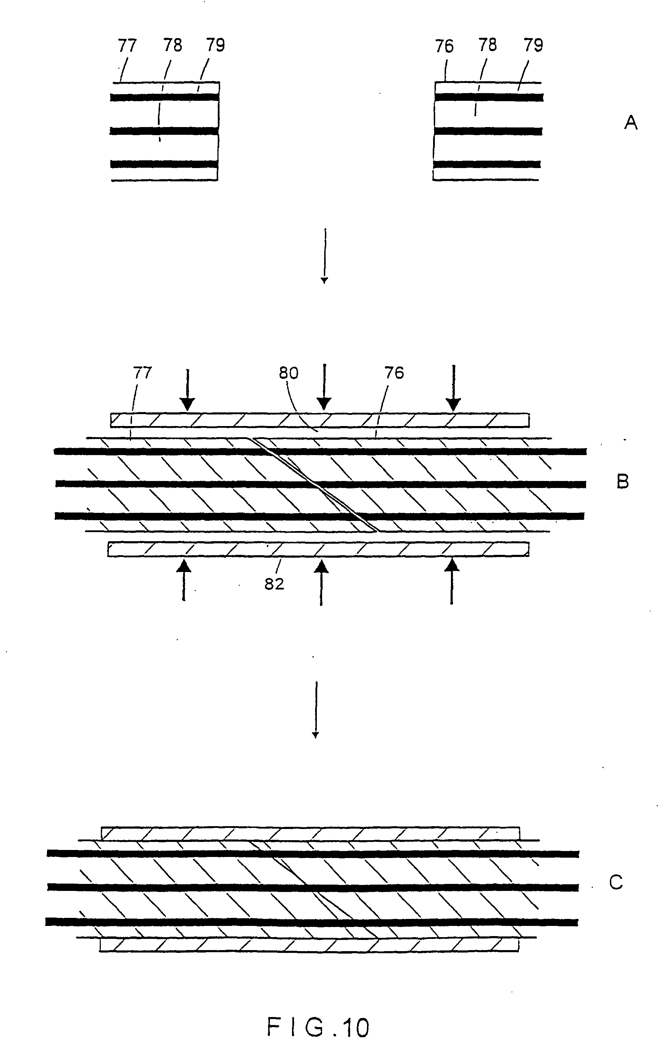

Fig. 10 shows a manner of joining ends of two super conductor cables in accordance with an embodiment of the invention. Two super conductor cables **76** and **77,** of which only the end portion is shown, comprise each a metal matrix **78** made from one metal alloy and filaments **79** made of another metal alloy. In order to have proper electrical continuity, it is necessary to join two ends so that the filaments will be coextensive. For this purpose, the ends **76** and **77** of the two cables are cut diagonally similarly as in the case of the rods in Fig. 8 and are brought into contact with one another within lumen **80** of cylindrical workpiece **82** (Fig. 10B). Then by the application of a pulsed magnetic force, represented schematically by the arrows in Fig. 10B, the cylindrical workpiece **82** is constricted onto the super conductor cable and consequently the tight joint between the two cables is obtained as shown in Fig. 10C.

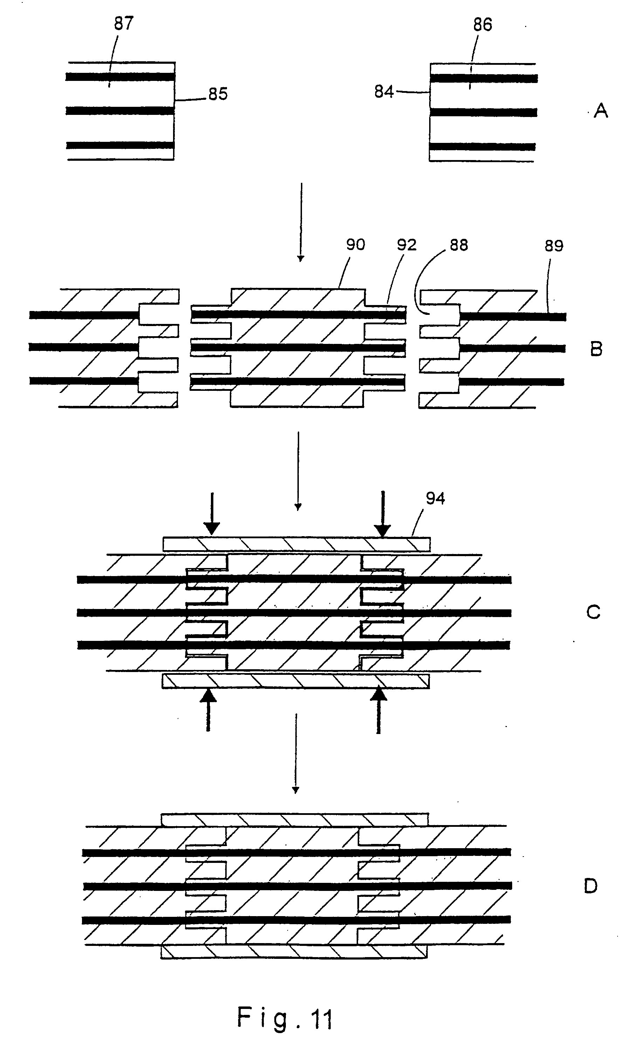

The manner of joining of two super conductor cables in accordance with another embodiment of the invention is shown in Fig. 11. The end faces **84** and **85** of cables **86** and **87** respectively, are bored to obtain a plurality of bores **88,** each corresponding to a filament **89** of the super conductor cable, as can be seen in Fig. 11B. A joining member **90** comprising projections **92** which correspond to bores **88** is combined with the two ends of the super conductor cables, as shown in Fig. 11C, and then a cylinder **94** is placed over this assembly. Then magnetic force is applied, as shown schematically by the arrows in Fig. 10C, and consequently cylinder **94** is constricted onto the cable and as a result a firm join is obtained, as shown in Fig. 11D.

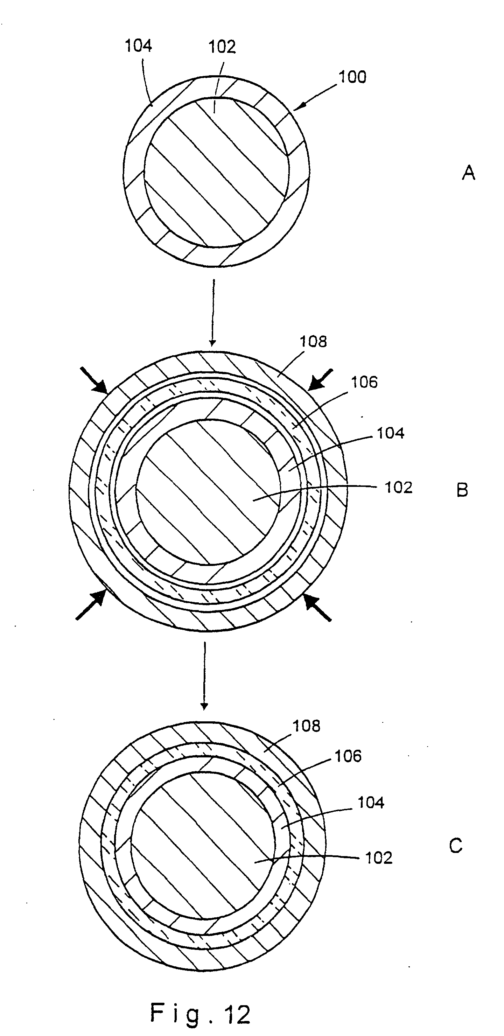

The manner of preparation of a ground cable or lead in accordance with an embodiment of the invention is shown in Fig. 12. A conductor **100** shown in Fig. 12A consists of a core **102** made of one alloy, e.g. iron, and a clad **104** made of another alloy, e.g. copper. The conductor **100** may be prepared as explained in relation to Figs. 7 and 8. A cylinder or envelope made of insulating material such as polyethylene, a ceramic material, etc. is placed over the conductor, the cylinder or envelope being overlaid by a metal, e.g. a copper cylinder, as can be seen in Fig. 12B. Following application of a magnetic force, as represented schematically by the arrows in Fig. 12B, the metal cylinder **108** is constricted, which causes also constriction of insulator **106** so as to achieve the tight structure shown in Fig. 12C.

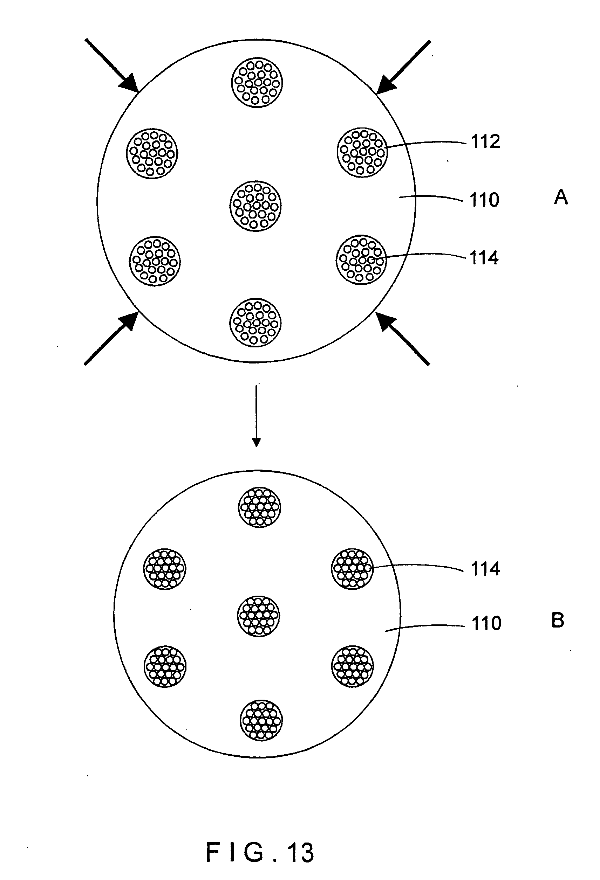

Reference is now being made to Fig. 13 showing the schematic representation of the manner of producing a super conductor cable in accordance with an embodiment of the invention. A longitudinal matrix **110** which is made of one alloy, e.g. copper, comprises a plurality of longitudinal bores **112,** and filaments **114** made from another alloy are introduced into each of the bores, as shown in Fig. 13A. Following the application of a pulsed magnetic force, as represented by the arrows in Fig. 13A, the entire cable is constricted and consequently the walls of each of the bores joins with the filaments to yield a super conductor cable with practically no void space, as can be seen in Fig. 13B.

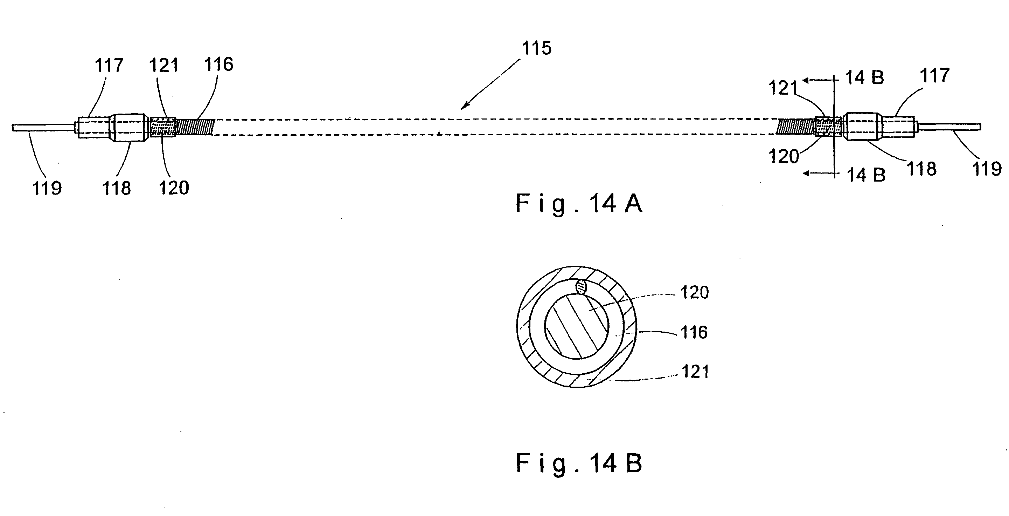

Reference is now being made to Fig. 14 illustrating a heating element **115** consisting of a coil **116** and a pin assembly **117.** Coil **116** is helical and extends between the two pins. Pin assemblies **117** consists of an insulating member **118,** made of plastic, a ceramic substance, etc., and an electric pin **119** which extends through insulating member **118** and ends at a portion **120** which is in contact with the end portion of coil **116.**

The element further comprises two metal sleeves **121** enveloping the ends of coil **116** overlapping portion **120** of pin **119.** Sleeve **121,** is constricted onto the structure consisting of portion **120** and coil **116** and brings to tight joining of the two elements to one another which ensures high quality electric contact which is highly resistant towards erosion which can occur during continued operation.

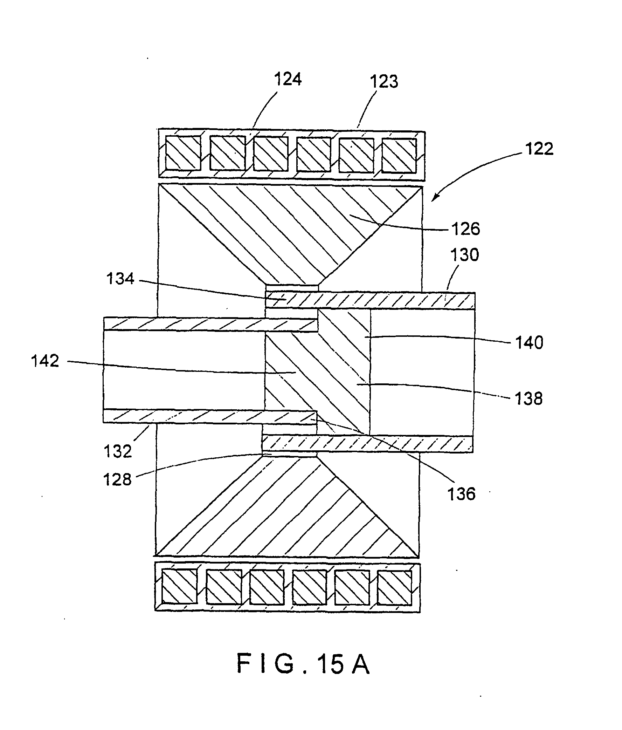

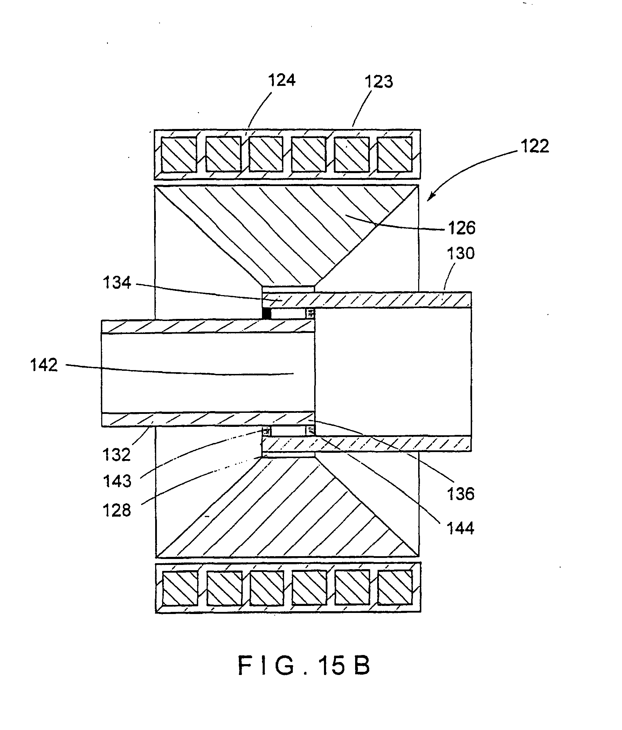

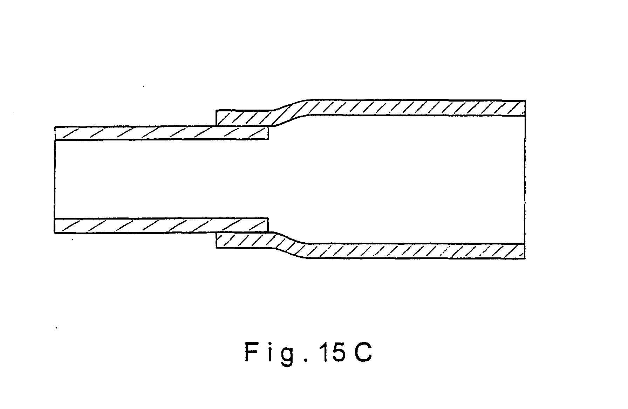

A device for use in joining or welding of elongated objects to one another, is shown in Fig. 15 (in longitudinal cross-sections). The device generally designated **122** comprises a forming coil **123** consisting of a plurality of windings, separated from one another by an insulating material **124.** The device also comprises a field shaper **126.**

As a result of application of the pulsed magnetic force, a strong magnetic pressure will result in the lumen **128** of the field shaper and as a result, a cylindrical object within the lumen will be constricted.

Fig. 15A shows two examples on the manner of using the device for joining together two hollow tubular workpieces which consists of a first tubular workpiece 130, of a relatively wider diameter, and a second tubular workpiece **132** of a narrower diameter. These two workpieces have respectively a portion **134** and **136** which are to be welded to one another. A problem in such welding is first to properly position the two workpieces so that they will be coaxial, and furthermore, it is necessary to provide conditions so that upon impact between two workpieces, the portion **136** of second workpiece **132** will remain essentially motionless and thus welded to portion **134** of the first workpiece. In the example shown in Fig. 15A these both feats are achieved by the use of insert **138** which has the first portion **140** with a diameter equal to the internal diameter of the tubular workpiece **130,** and has a second portion **142** which has a diameter equal to the internal diameter of tubular workpiece **132**. The two portions **140** and **142** are coaxial and accordingly, the first workpiece **130** and the second workpiece **132** are also coaxial. Furthermore, portion **142** of insert **138** supports portion **136** thus upon application of a magnetic force, portion **134** moves rapidly towards portion **136,** which remains essentially motionless during impact, thus the two portions become welded to one another.

Support of the internal walls of a tubular workpiece during impact by an external tubular workpiece may also be achieved by a variety of other means. These include, for example, filling the entire cylinder with a non-compressible liquid such as water; introducing into the tube a magnetic liquid such as mercury, oil with suspended metal particles, etc., and then applying a constant magnetic field prior to the PMF so as to concentrate the magnetic liquid at a portion where the support is required; by means of ice frozen at a respective portion; etc. Such solutions of support are required, for example, where the internal cylinder is long and it is thus not possible to introduce an insert such as that shown in Fig. 15A.

Fig. 15B shows the manner of using the same device without employing an insert. In Fig. 15B, the two workpieces are made to be coaxial by the use of two annular members **143** and **144**. These two annular members may be made from the same alloy as workpieces **130** and **132,** or be made of a different alloy. These two annular members assist somewhat in shaping the magnetic field and also serve to improve the quality of the weld: upon application of the PMF force, the rapid internal movement of portion **134,** the two annular members **143** and **144** blend with portions **134** and **136**. In order to ensure optimal conditions, i.e., that there will be no constriction of portion **136** upon impact, the PMF must be applied in a very short pulse, typically for a time which equals about or slightly above T/4 (T = $2\pi\sqrt{LC}$). The following Equation 8 provides an example of an approximate relation between the various parameters which allow it to meet the necessary requirement:

$$\frac{m_1 \ U^2 l^2}{2\mu_0 W n^2} \cong \frac{\pi}{2} \ \sqrt{\frac{C}{L}} \tag{8}$$

where

l  is the length of working coil
n  is the number of winds of working coil,
L  is the total inductance of discharge circuit.

A joint between two tubular workpieces at a different diameter is shown in Fig. 15C.

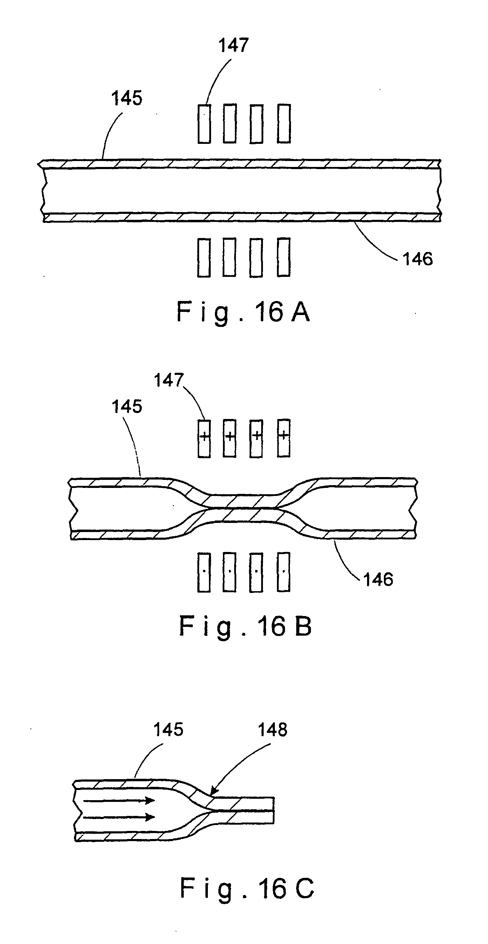

Reference is now being made to Fig. 16 showing an embodiment of the invention concerned with the crimping of walls of a metal tube and welding internal surfaces one to another. An example of use of this embodiment is in sealing of metal tubes containing a coolant gas used in refrigeration or heating systems, e.g. in refrigerators or airconditioner systems, or sealing of tubes containing flammable gas (e.g. cooking gas etc.).

Fig. 16A is a longitudinal schematic cross section showing a metal tube **145** a portion of which **146** being surrounded by a metal coil **147**. Upon rapid discharge of current through coil **147,** as shown in Fig. 16B, the pulse magnetic forms crimps the walls of portion **146** and brings to welding of the internal walls of this portion one to the other. As can be seen in Fig. 16B, after crimping, there is thickening of the walls of portion **146**. Portion **146** may then be cut in its middle thus yielding a sealed end **148,** preventing outflow of gas from within the tube, (represented by the arrows).

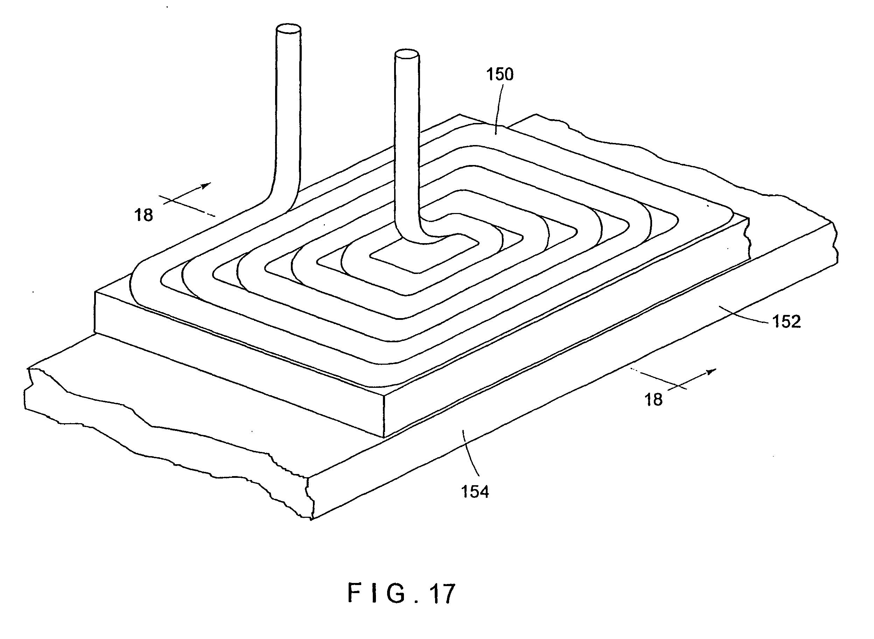

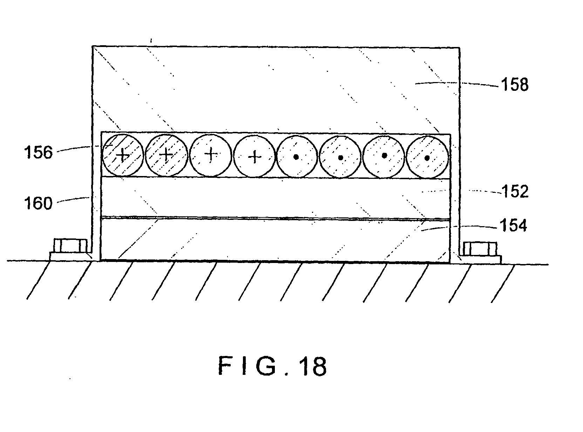

A set-up for welding of two planar metal workpieces is shown in a perspective view in Fig. 17 and in a cross-section in Fig. 18 (in Fig. 17, the support structure of the coil has been removed for the purpose of ease of illustration). In order to join two planar workpieces, an essentially planar coil is used. Planar coil **150** shown in Fig. 17 has an overall shape and size substantially the same as the shape and size of the area of the first workpiece **152** which is to be joined with the second workpiece **154**. As can be seen in Fig. 18, the coil windings **156** are held in place by support wall **158** which is anchored onto a working stage by means of anchoring member **160.** Upon passing of a pulsed current in coil **150,** planar workpiece **152** will move rapidly downwards and if it will impact, workpiece **154** sufficiently rapidly, e.g. at a speed above 300 M/sec, the two metal workpieces will be welded to one another. For that purpose, a magnetic force is applied from the direction as represented by the arrows in these figures.

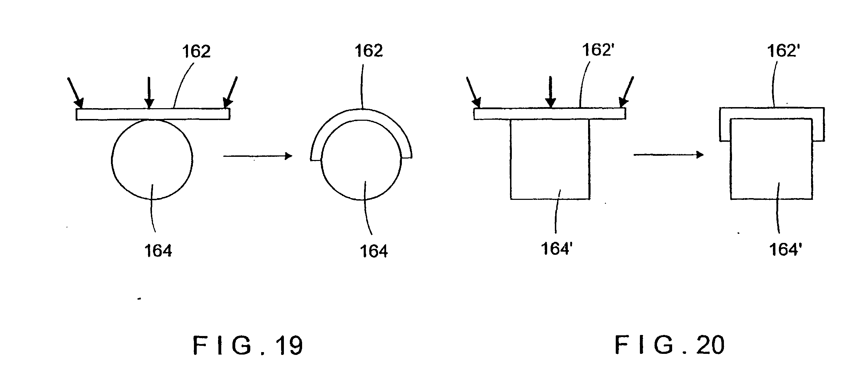

Reference is now being made to Figs. 19 and 20 showing, schematically, the welding of a planar workpiece **162** and **162'** onto objects **164** and **164',** which are respectively a cylindrical and a prismatic object (shown in cross-section).

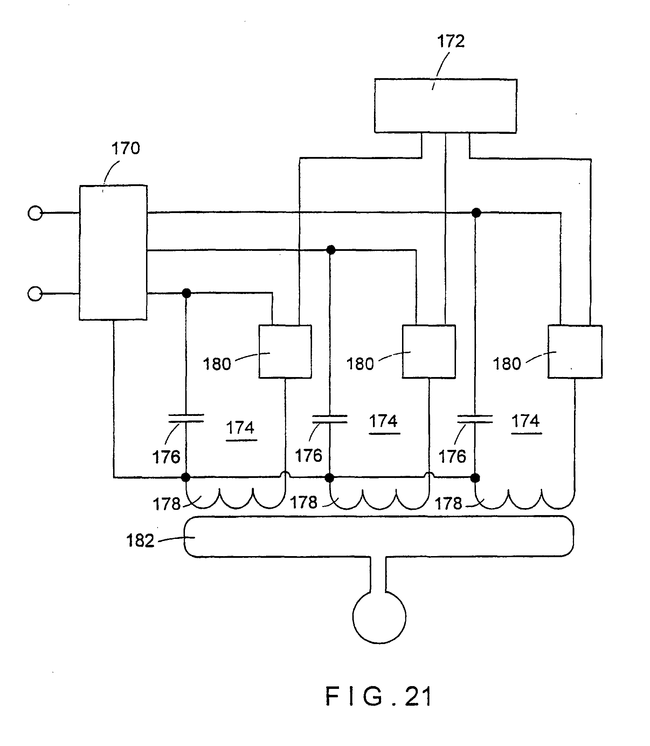

Reference is now being made to Fig. 21 showing a block diagram of the electric circuit for the provision of pulsed magnetic force in a device in accordance with an embodiment of the invention. The device comprises a power generator **170,** which may be multi-channel as in the depicted embodiment, and one or a plurality of current circuits **174** (three are shown in this embodiment) and a field shaper **182.** Each such circuits **174** comprises a capacitor battery **176,** a forming coil **178** and a pulsed discharge switch **180.** Each of switches **180** is under the control of a multi-channel triggering generator **172.**

Electric power, which is provided by power supply **170,** accumulates in a capacitor or bank or capacitors **176** and following a trigger provided by generator **172,** the accumulated potential discharges through coil **180.** A device comprises a plurality of magnetic forming circuits is uniquely provided by the invention. The advantage of such a device is that by proper timing of the triggers to each of the switches **180,** a series of pulsed magnetic forces may be applied which may be advantageous for a number of applications.

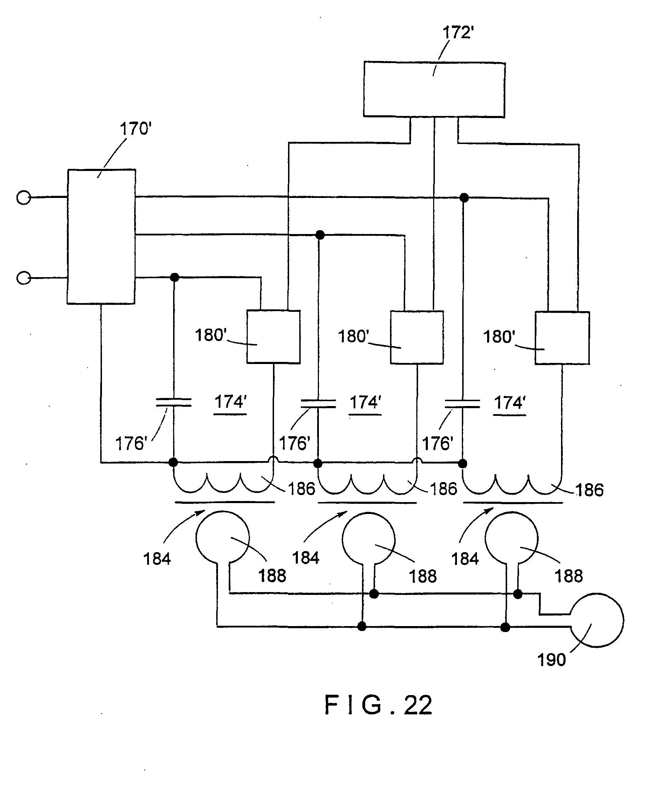

A block diagram of a circuitry is shown in Fig. 22. In Fig. 22, like elements to those of Fig. 21 have been given like numbers with a prime indication. This is particularly useful for providing very intense energies. The device comprises a transformer **184** for each of circuits **174'** which comprises a primary coil **186** having a plurality of windings and a secondary coil **188** having a single wind. All the secondary coils **188** are connected in parallel to forming coil **190.**

## Claims

1. A method for joining or welding of at least two solid portions (22 and 28; 53 and 54; 63 and 64; 67 and 68; 70 and 71; 76, 77 and 82; 86, 87, 90 and 94; 100, 106 and 108, 110 and 114; 142, 134 and 136; 134, 136, 143 and 144; 152 and 154, 162 and 164, 162' and 164'), comprising forcing the solid portions one against the other by inducing rapid movement in at least one of the solid portions so as to cause at least one surface thereof to impact the other solid portions, said at least one of the solid portions being made of or comprising at least one surface made of an electrically conductive material, and the movement being induced by a pulsed magnetic forming force **characterised in that** the pulsed magnetic forming force is at a magnitude such that the velocity **U** of the surface of the at least one of the solid portions prior to impact with the other solid portions is represented by the following Equation (1):

$$U \geq \sqrt{(A_1 + A_2)/m_1} \qquad (1)$$

wherein

U          is the velocity of the moving surface of the at least one of the solid portions, prior to the impact,

$m_1$          is the mass of the at least one of the solid portions; and

$A_1$ and $A_2$    are the plastic deformation energy of the at least one of the solid portions, and the elastic deformation energy of the other solid portions, respectively, which may be calculated according to the following Equations (2) and (3):

$$A_1 = \sigma_1 V_1 \ell^{\ln(1/(1+\delta_1))}/(r_{01}/r_1 - 1) \qquad (2)$$

$$A_2 = \sigma_2 V_2 \ell^{\ln(1/(1+\delta_2))}/(r_{02}/r_2 - 1) \qquad (3)$$

wherein $r_{01}$ and $r_{02}$    are, respectively, the radii of the at least one of the solid portions and of the other solid portions prior to the deformation,

$r_1$ and $r_2$          are, respectively, the radii of the at least one of the solid portions and of the other solid portions after deformation,

$\sigma_1$ and $\sigma_2$        are the tensile strength of the material,

$V_1$ and $V_2$        are, respectively, the volumes enclosed within the at least one of the solid portions and within the other solid portions after the deformation; and

$\delta_1$ and $\delta_2$        are the relative extension of the at least one of the solid portions and of the other solid portions, respectively, calculated according to the following Equations (4) and (5):

$$\delta_1 = \left| \frac{r_{01} - r_1}{r_{01}} \right| \qquad\qquad (4)$$

$$\delta_2 = \left| \frac{r_{02} - r_2}{r_{02}} \right| \qquad\qquad (5)$$

2. A method according to Claim 1, for joining or welding of two solid portions (22 and 28; 53 and 54; 63 and 64; 76, 77 and 82; 86, 87, 90 and 94; 100, 106 and 108; 110 and 114, 142, 134 and 136); each being an elongated portion on a separate workpiece; at least a first portion, being a worked on portion, is hollow (22, 53, 63, 82, 94, 108 and 106, 110, 134 and 136) the dimensions of the two solid portions being initially such that they can fit one into the other; the method comprising:

   (a) inserting one of the two solid portions into a hollow interior of the other;
   (b) causing surfaces of a first elongated worked on portion of a first workpiece to move towards opposite surfaces of the other elongated counter portion of the second workpiece by means of a pulsed magnetic force, so as to cause the surfaces of the worked on portion to impact the opposite surfaces of the counter portion at a velocity U represented by said Equation (1); whereby the two portions become joined or welded to one another.

3. A method according to Claim 2, wherein said worked on portion is a cylindrical receptacle (22, 53, 82, 94, 108, 110) and said counter portion is a cable (28, 54, 77, 76,87, 86, 90, 100, 114).

4. A method according to Claim 3, wherein a metal cable is joined or welded to a connector.

5. A method according to Claim 2, wherein said first workpiece is an envelope or matrix (82, 94, 110) of a super-conductor cable made of one alloy and the second workpiece (76, 77, 86, 87, 90, 114) is one or more filaments made of a second alloy inserted in a lumen or longitudinal bores of the super-conductor cable; the method comprising inserting said filament in said lumen or bores and then constricting said matrix or envelope by means of said pulsed magnetic force.

6. A method according to Claim 2, for the production of a ground lead (100, 106 and 108).

7. A method according to Claim 1, comprising crimping walls of a tube (145, 146) and joining or welding inner faces thereof to one another (148).

8. A method according to either of Claims 1 or 2, wherein the working voltage V is calculated by the following Equations (6) and (7):

$$W = \frac{k m_1 U^2 L l_1}{4 \pi \mu_0 r_{01} h} \qquad\qquad (6)$$

$$V = \sqrt{\frac{2W}{C}} \qquad\qquad (7)$$

where

| | |
|---|---|
| W | is the energy stored in the capacitor battery, |
| k | is a coefficient which depends on the parameters of the PMF device and parameters of working coil, |
| l | is the length of the working coil; |
| $\mu_0$ | is the magnetic permeance in vacuum; |
| h | is the thickness of the space between the working coil and the workpiece; and L is the total inductance of the electric discharge circuit (the coil, pulse generating switch and capacitor battery) |
| U, m and $r_{01}$ | are as defined in Claim 1. |

9. A method according to Claim 1, wherein the at least two portions (152 and 154, 162' and 164') are essentially planar and are being welded to one another.

**Patentansprüche**

1. Verfahren zum Verbinden oder Verschweißen von mindestens zwei festen Teilen (22 und 28; 53 und 54; 63 und 64; 67 und 68; 70 und 71; 76, 77 und 82; 86, 87, 90 und 94; 100, 106 und 108, 110 und 114; 142, 134 und 136; 134, 136, 143 und 144; 152 und 154, 162 und 164, 162' und 164'), umfassend das Drücken der festen Teile gegeneinander durch Einleiten einer schnellen Bewegung in zumindest einem der festen Teile, um zu bewirken, daß zumindest eine Oberfläche derselben auf die anderen festen Teile aufprallt, wobei der zumindest eine der festen Teile aus mindestens einer Oberfläche besteht oder diese umfaßt, welche aus einem elektrisch leitenden Material besteht, und die Bewegung durch eine Magnetimpuls-Formgebungskraft eingeleitet wird, **dadurch gekennzeichnet, daß** die Magnetimpuls-Formgebungskraft bei einer Größe liegt, so daß die Geschwindigkeit U der Oberfläche des zumindest einen der festen Teile vor dem Aufprall auf die anderen festen Teile durch die folgende Gleichung (1) dargestellt wird:

$$U \geq \sqrt{(A_1 + A_2)/m_1} \tag{1}$$

wobei

U die Geschwindigkeit der sich bewegenden Oberfläche des zumindest einen der festen Teile vor dem Aufprall ist,

$m_1$ die Masse des zumindest einen der festen Teile ist, und

$A_1$ und $A_2$ die Energie der plastischen Verformung des zumindest einen der festen Teile bzw. die Energie der elastischen Verformung der anderen festen Teile sind, die gemäß den folgenden Gleichungen (2) und (3) berechnet werden können:

$$A_1 = \sigma_1 V_1 \ell^{\ln(1/(1+\delta_1))}/(r_{01}/r_1 - 1) \tag{2}$$

$$A_2 = \sigma_2 V_2 \ell^{\ln(1/(1+\delta_2))}/(r_{02}/r_2 - 1) \tag{3}$$

wobei

$r_{01}$ und $r_{02}$ jeweils die Radien des zumindest einen der festen Teile und der anderen festen Teile vor der Verformung sind,

$r_1$ und $r_2$ jeweils die Radien des zumindest einen der festen Teile und der anderen festen Teile nach der Verformung sind,

$\sigma_1$ und $\sigma_2$ die Zugfestigkeit des Materials ist,

$V_1$ und $V_2$ jeweils die innerhalb des zumindest einen der festen Teile und innerhalb der anderen festen Teile eingeschlossenen Volumina nach der Verformung sind, und

$\delta_1$ und $\delta_2$ die relative Dehnung des zumindest einen der festen Teile bzw. der anderen festen Teile sind, die gemäß den folgenden Gleichungen (4) und (5) berechnet werden:

$$\delta_1 = \left| \frac{r_{01} - r_1}{r_{01}} \right| \tag{4}$$

$$\delta_2 = \left| \frac{r_{02} - r_2}{r_{02}} \right| \tag{5}$$

2. Verfahren nach Anspruch 1 zum Verbinden oder Verschweißen von zwei festen Teilen (22 und 28; 53 und 54; 63 und 64; 76, 77 und 82; 86, 87, 90 und 94; 100, 106 und 108; 110 und 114, 142, 134 und 136); wobei jeder ein langgestreckter Teil an einem separaten Werkstück ist;
wobei zumindest ein erster Teil, der ein bearbeiteter Teil ist, hohl ist (22, 53, 63, 82, 94, 108 und 106, 110, 134 und 136), wobei die Abmessungen der zwei festen Teile anfänglich derart sind, daß sie ineinander passen können; wobei das Verfahren folgendes umfaßt:

(a) Einsetzen von einem der zwei festen Teile in ein hohles Inneres des anderen;
(b) Bewirken, daß sich die Oberflächen eines ersten langgestreckten bearbeiteten Teils eines ersten Werkstücks zu entgegengesetzten Oberflächen des anderen langgestreckten Gegenstücks des zweiten Werkstücks hin bewegen, durch eine Magnetimpulskraft, um zu bewirken, daß die Oberflächen des bearbeiteten Teils auf die entgegengesetzten Oberflächen des Gegenstücks mit einer Geschwindigkeit U, die durch die Gleichung (1) dargestellt ist, aufprallen; wodurch die zwei Teile miteinander verbunden oder verschweißt werden.

3. Verfahren nach Anspruch 2, wobei der bearbeitete Teil ein zylindrischer Behälter (22, 53, 82, 94, 108, 110) ist und das Gegenstück ein Kabel (28, 54, 77, 76, 87, 86, 90, 100, 114) ist.

4. Verfahren nach Anspruch 3, wobei ein Metallkabel mit einem Verbindungsstecker verbunden oder verschweißt wird.

5. Verfahren nach Anspruch 2, wobei das erste Werkstück eine Umhüllung oder Matrix (82, 94, 110) eines Supraleiterkabels ist, die aus einer Legierung besteht, und das zweite Werkstück (76, 77, 86, 87, 90, 114) ein oder mehrere Drähte sind, die aus einer zweiten Legierung bestehen, welche in einen Hohlraum oder Längsbohrungen des Supraleiterkabels eingesetzt werden; wobei das Verfahren das Einsetzen des Drahts in den Hohlraum oder die Bohrungen und dann das Zusammenschnüren der Matrix oder Umhüllung mittels der Magnetimpulskraft umfaßt.

6. Verfahren nach Anspruch 2 für die Herstellung eines Erdleiters (100, 106 und 108).

7. Verfahren nach Anspruch 1, umfassend das Quetschen von Wänden eines Rohrs (145, 146) und das Verbinden oder Verschweißen von dessen Innenflächen miteinander (148).

8. Verfahren nach einem der Ansprüche 1 oder 2, wobei die Arbeitsspannung V durch die folgenden Gleichungen (6) und (7) berechnet wird:

$$W = \frac{km_1 U^2 L \ell_1}{4\pi\mu_0 r_{01} h} \tag{6}$$

$$V = \sqrt{\frac{2W}{C}} \tag{7}$$

wobei

| | |
|---|---|
| W | die in der Kondensatorbatterie gespeicherte Energie ist, |
| k | ein Koeffizient ist, der von den Parametern der PMF-Vorrichtung und den Parametern der Arbeitsspule abhängt, |
| l | die Länge der Arbeitsspule ist, |
| $\mu_0$ | der magnetische Leitwert im Vakuum ist, |
| h | die Dicke des Raums zwischen der Arbeitsspule und dem Werkstück ist, |
| L | die Gesamtinduktivität der elektrischen Entladungsschaltung (der Spule, des Impulserzeugungsschalters und der Kondensatorbatterie) ist, und |
| U, m und $r_{01}$ | wie in Anspruch 1 definiert sind. |

9. Verfahren nach Anspruch 1, wobei die mindestens zwei Teile (152 und 154, 162' und 164') im wesentlichen planar sind und aneinander geschweißt werden.

**Revendications**

1. Procédé d'assemblage ou de soudage d'au moins deux parties solides (22 et 28 ; 53 et 54 ; 63 et 64 ; 67 et 68 ; 70 et 71 ; 76, 77 et 82 ; 86, 87, 90 et 94 ; 100, 106 et 108, 110 et 114 ; 142, 134 et 136 ; 134, 136, 143 et 144 ; 152 et 154, 162 et 164, 162' et 164'), comprenant le forçage des parties solides l'une contre l'autre par l'introduction d'un mouvement rapide dans au moins l'une des parties solides afin de faire qu'au moins une surface de celle-ci percute les autres parties solides, ladite au moins une des parties solides étant faite de, ou comprenant au moins une surface faite d'un matériau électoconducteur, et le mouvement étant induit par une force de formage par champ magnétique pulsé, **caractérisé en ce que** la force de formage par champ magnétique pulsé est d'une grandeur telle que la vitesse U de la surface de ladite au moins une des parties solides avant de percuter les autres parties solides est représentée par l'Equation (1) suivante :

$$U \geq \sqrt{(A_1 + A_2)/m_1} \qquad (1)$$

où

U          est la vitesse de la surface qui se déplace de ladite au moins une des parties solides, avant l'impact
$m_1$         est la masse de ladite au moins une des parties solides ; et
$A_1$ et $A_2$    sont respectivement l'énergie de déformation plastique de ladite au moins une des parties solides, et l'énergie de déformation plastique des autres parties solides, qui peuvent être calculées selon les Equations (2) et (3) suivantes :

$$A_1 = \sigma_1 V_1 l^{\ln(1/(1/\delta_1))}/(r_{01}/r_1 - 1) \qquad (2)$$

$$A_2 = \sigma_2 V_2 l^{\ln(1/(1/\delta_2))}/(r_{02}/r_2 - 1) \qquad (3)$$

où

$r_{01}$ et $r_{02}$    sont respectivement le rayon de ladite au moins une des parties solides et des autres parties solides avant la déformation,
$r_1$ et $r_2$      sont respectivement le rayon de ladite au moins une des parties solides et des autres parties solides après la déformation,
$\sigma_1$ et $\sigma_2$    sont la résistance à la traction du matériau,
$V_1$ et $V_2$      sont respectivement les volumes contenus dans ladite au moins une des parties solides et dans les autres parties solides après la déformation, et
$\delta_1$ et $\delta_2$    sont l'extension relative de, respectivement, ladite au moins une des parties solides et des autres parties solides, calculée selon les Equations (4) et (5) suivantes :

$$\delta_1 = \left| \frac{r_{01}-r_1}{r_{01}} \right| \qquad (4)$$

$$\delta_2 = \left| \frac{r_{02}-r_2}{r_{02}} \right| \qquad (5)$$

2. Procédé selon la Revendication 1, pour l'assemblage ou le soudage de deux parties solides (22 et 28 ; 53 et 54 ; 63 et 64 ; 76, 77 et 82 ; 86, 87, 90 et 94 ; 100, 106 et 108 ; 110 et 114 ; 142, 134 et 136), chacune étant une partie longitudinale d'une pièce à travailler distincte ; au moins une première partie, qui est une partie sur laquelle on agit, est creuse (22, 53, 63, 82, 94, 108 et 106, 110, 134 et 136), les dimensions des deux parties solides étant initialement telles que l'on puisse insérer l'une dans l'autre, le procédé comprenant :

   (a) l'insertion de l'une des deux parties solides dans un volume intérieur creux de l'autre ;
   (b) la mise en mouvement des surfaces d'une première partie longitudinale sur laquelle on agit d'une première pièce à travailler en direction des surfaces opposées de l'autre partie longitudinale qui va de pair avec la deuxième pièce à travailler au moyen d'une force magnétique pulsée, afin de provoquer la percussion des surfaces de la pièce sur laquelle on agit contre les surfaces opposées de la partie qui va de pair, selon une vitesse U représentée par ladite Equation (1), les deux portions en étant ainsi réunies ou soudées l'une à l'autre.

3. Procédé selon la Revendication 2, dans lequel ladite partie sur laquelle on agit est un réceptacle cylindrique (22, 53, 82, 94, 108, 110) et ladite partie qui va de pair est un câble (28, 54, 77, 76, 87, 86, 90, 100, 114).

4. Procédé selon la Revendication 3, dans lequel un câble métallique est réuni ou soudé à un connecteur.

5. Procédé selon la Revendication 2, dans lequel ladite première pièce à travailler est une enveloppe ou matrice (82, 94, 110) d'un câble supraconducteur fait d'un premier alliage et la seconde pièce à travailler (76, 77, 86, 87, 90, 114) est un ou plusieurs filaments d'un second alliage inséré dans un passage ou des alésages longitudinaux du câble supraconducteur, le procédé comprenant l'insertion dudit filament dans le(s)dit(s) passage ou alésages, puis la constriction de ladite matrice ou enveloppe au moyen de ladite force magnétique pulsée.

6. Procédé selon la Revendication 2, pour la production d'un conducteur de terre (100, 106 et 108).

7. Procédé selon la Revendication 1, comprenant le sertissage des parois d'un tube (145, 146) et la réunion ou le soudage des faces intérieures de celui-ci l'une à l'autre (148).

8. Procédé selon l'une quelconque des Revendications 1 ou 2, dans lequel la tension de service V est calculée par les Equations (6) et (7) suivantes :

$$W = \frac{km_1 U^2 L l_1}{4\pi\mu_0 r_{01} h} \tag{6}$$

$$V = \sqrt{\frac{2W}{C}} \tag{7}$$

où

W est l'énergie stockée dans la batterie de condensateurs,

k est un coefficient qui dépend des paramètres du dispositif PMF (formage par champ magnétique pulsé) et des paramètres de la bobine de service,

l est la longueur de la bobine de service,

$\mu_0$ est la perméance magnétique dans le vide,

h est l'épaisseur de l'espace entre la bobine de service et la pièce à travailler, et

L est l'inductance totale du circuit de décharge électrique (la bobine, le commutateur générateur d'impulsions et la batterie de condensateurs),

U, m et $r_{01}$ sont tels que définis dans la Revendication 1.

9. Procédé selon la Revendication 1, dans lequel lesdites au moins deux parties (152 et 154, 162' et 164') sont essentiellement planes et sont soudées l'une à l'autre.

FIG.1

FIG.2

FIG.3

FIG.4

FIG.5

FIG.6A

Fig. 6 B

F I G . 7

FIG.8

A

B

FIG.9

F I G . 10

Fig.11

Fig. 12

F I G . 13

Fig.14 A

Fig.14 B

EP 0 868 233 B1

F I G . 15 A

F I G . 15 B

Fig. 15 C

147

145

146

F i g . 16 A

147

145

146

F i g . 16 B

145        148

F i g . 16 C

FIG. 17

EP 0 868 233 B1

FIG. 18

EP 0 868 233 B1

162

162

164

164

**F I G . 19**

162'

162'

164'

164'

**F I G . 20**

F I G . 21

F I G . 22